# EUROPEAN PATENT APPLICATION

(11) **EP 4 497 941 A1**
(43) Date of publication of application: **29.01.2025**
(21) Application number: 23187605.3
(22) Date of filing: 25.07.2023
(51) Int. Cl.: F03D 1/06, F03D 7/02

(54) **SERRATED PANEL FOR A WIND TURBINE ROTOR BLADE**

(71) Applicant: Nordex Energy SE & Co. KG, 22419 Hamburg (DE)
(72) Inventor: Doosttalab, Mehdi, 22419 Hamburg (DE); Rautmann, Christof, 22419 Hamburg (DE)
(74) Representative: Hauck Patentanwaltspartnerschaft mbB

(57) **Abstract**

A serrated panel for a trailing edge of a wind turbine rotor blade comprising:
• at least two teeth, each tooth having a tip, a base, a length measured in a chordwise direction between the base and the tip, a width measured at the base, wherein the length is larger than the width, and two edges running from the tip to the base, each edge having a tip end-section extending from the tip to an intermediate point of the edge, and a main section extending from the intermediate point towards the base, and
• a plurality of tines arranged side by side in a chordwise direction, each tine beginning at one of said edges and extending rearwards,
• all tines beginning in one of said main sections have the same, first length, which is between 20 % and 60 % of the length of the respective tooth, and all tines beginning in one of said tip end-sections are shorter than the first length.

## Description

The invention relates to a serrated panel for the trailing edge of a wind turbine rotor blade.

These panels have been suggested for noise reduction in wind turbines. The panels are designed with a series of teeth placed along the trailing edge of the wind turbine rotor blade, which can help to reduce aerodynamic noise generated by the rotor blade. In particular, the serrations on the trailing edge of a wind turbine rotor blade can help to reduce the formation of vortices, reducing the overall noise level produced by the wind turbine.

Studies have shown that the use of serrated panels can reduce the noise level of wind turbines significantly. This can help make wind turbines more acceptable to local communities by reducing the impact of noise pollution.

A wind turbine rotor blade with a serrated panel at the trailing edge has become known from the document DE 10 2011 056 491 A1. The panel has a number of triangular teeth, and a plurality of bristles extending from rear edges of the teeth.

From the document WO 2018/130651 A1 a wind turbine rotor blade with a trailing edge noise reduction device has become known. The noise reduction device comprises a panel with a number of teeth and multiple bristles arranged between adjacent teeth.

From the document EP 3 268 605 B1, a wind turbine rotor blade with a serrated panel having the features of the preamble of claim 1 has become known.

Departing therefrom, it is an object of the invention to provide a serrated panel being easy to manufacture and offering improved noise reduction.

This problem is solved by the serrated panel with the features of claim 1. Preferred aspects are given in the dependent claims. The serrated panel for a trailing edge of a wind turbine rotor blade comprises:
- at least two teeth, each tooth having a tip, a base, a length measured in a chordwise direction between the base and the tip, a width measured at the base, wherein the length is larger than the width, and two edges running from the tip to the base, each edge having a tip end-section extending from the tip to an intermediate point of the edge, and a main section extending from the intermediate point towards the base, and
- a plurality of tines arranged side by side in a chordwise direction, each tine beginning at one of said edges and extending rearwards, characterised in that
- all tines beginning in one of said main sections have the same, first length, which is between 20 % and 60 % of the length of the respective tooth, and all tines beginning in one of said tip end-sections are shorter than the first length.

The panel is for a trailing edge of a wind turbine rotor blade and has a longitudinal direction. The teeth are arranged in a row along the longitudinal direction. The panel will be arranged with reference to the rotor blade such that the panel's longitudinal direction is aligned with the trailing edge of the rotor blade. The panel's longitudinal direction then extends substantially along a spanwise direction of the rotor blade. The spanwise direction is perpendicular to the chordwise direction of the rotor blade.

The teeth may each have a triangular shape with straight edges. Nevertheless, the tip may also be rounded, and/or the edges may be curved as well. In general, each tooth has a longitudinal extension (measured in the chordwise direction of the rotor blade) which is larger than a width (measured in the lengthwise direction of the rotor blade) of the tooth. The teeth may be arranged with or without spacings between adjacent teeth.

The outer contour of each tooth is formed by two edges, each running form the tip to the base. Each of these edges comprises a tip end-section extending from the tip to an intermediate point of the edge. The two tip end-sections of the edges of a tooth meet at the tip, and therefor correspond to a tip section of the tooth arranged at the rearmost end of the tip. A main section of each edge is beginning at the intermediate point and extends from there towards the base. The main section may extend all the way to the base. It may also be shorter, ending in a distance from the base. In this case, the edges each have an additional base end section extending from the end of the main section to the base. We note the main section may be longer than the tip end-section. However, it may also have the same length or may be shorter.

The tines are elongated elements beginning at the edges and extending from there in a chordwise direction, substantially corresponding to an aerodynamic flow direction. The tines might not be arranged exactly in chordwise direction, for example when using distinct angles in the individual panels and due to varying angles of the trailing edge with referene to the pitch axis. Deviations of for example +/- 10° or +/- 5° are possible. The tines have a certain stiffness, so that in operation they may be deformed by the aerodynamic flow to a certain degree only. In particular, the tines' stiffness may be greater than a stiffness of thin fibres or bristles that have also been used in the prior art to influence the aerodynamic flow.

All tines beginning in a main section have the same length, referred to here as the first length. This first length is between 20 % and 60 % of the length of the respective tooth, that is of the tooth from which the tines extend. When the main section is straight, the free ends of the tines extending therefrom are arranged on a straight line which is arranged in a fixed distance from the main section. When the main section is curved, the tip ends of the tines extending therefrom are arranged on a curve which may differ from the curve of the main section. However, the area between the edge of the main section and the straight line or curve formed by the free ends of the tines will always have the same extension in the direction of flow, which direction corresponds to the length direction of the tines.

All tines beginning in one of said tip end-sections are shorter than the first length. In other words, the tines arranged in a region near the tip are shorter than the tines arranged in the main section.

The noise-mitigating effect of a serrated panel is a complex process. The dimensions of the teeth used in known serrated panels are related to typical length scales of the flow, such as a boundary layer thickness. However, the geometrical boundary conditions in particular, in combination with the tines added to the teeth are complex, and many different length scales may occur in the boundary layer, wherein each length scale will create noise in a certain frequency range. As a consequence, the overall noise is not tonal but broadband, and the most promising noise mitigating strategy must address different length scales and frequencies.

The inventors realized that the claimed combination of constant-length tines in the main sections, with a specific length adapted to the length of the teeth, and shorter tines in the tip end-sections provides the best noise mitigating effect in the most relevant frequency range. The noise-mitigating effect was even better than with a similar panel having longer tines in the main sections. This is surprising, because in general, one would expect longer tines to have a stronger effect.

However, the inventors noticed there seems to be an upper limit that depends on the length of the serration teeth; beyond which upper limit, the noise-mitigating effect cannot be significantly improved. At the same time, the inventors observed that at the tip end-sections, shorter tines are sufficient, which may in part be due to the fact that turbulent length scales that pass here are more prone to be reduced with shorter tines.

In summary, the specific selection of the lengths of the tines provides a superior level of noise mitigation.

In addition, manufacturing the inventive serrated panels is particularly easy and maintenance/long term stability are improved because the tines are not longer than necessary.

In an aspect, the lengths of said tines beginning in one of said tip end-sections are selected such that these tines extend at least up to a straight line connecting the tips of adjacent teeth. This ensures the shorter tines still have a length adapted to the geometry of the teeth and are long enough to provide good noise mitigation.

In an aspect, the lengths of said tines beginning in one of said tip end-sections are selected such that these tines end at a straight line connecting the tips of adj acent teeth. It was found that these specific lengths of the shorter tines provide good noise mitigation, while the risk damaging the tines during transport or in operation is reduced.

In an aspect, the serrated panel comprises a fastening section adapted for being integrated into or attached to a wind turbine rotor blade, wherein the at least two teeth extend from a rearward end of the fastening section. Integration of the serrated panel into the rotor blade may be carried out by placing the serrated panel in a layup of a rotor blade shell member or between two half shells of the rotor blade. Attachment of the serrated panel to a wind turbine rotor blade may include an adhesive placed between an outer surface of the rotor blade and an adherend surface of the fastening section. In both cases, the serrated panel may be fixed such that the teeth extend beyond a trailing edge of the rotor blade, wherein the bases of the teeth may be substantially aligned with the trailing edge. In an aspect, a tooth and the tines extending from that tooth are manufactured in one piece, in particular using injection molding. This makes manufacturing of the serrated panel particularly easy and cost efficient. Both elements, the tooth and the tines, may be made out of the same material.

In an aspect, the serrated panel is manufactured in one piece, in particular using injection moulding. In this aspect, the entire serrated panel is particularly easy to manufacture, and may consist of the same material.

In an aspect, the tines have a constant cross section. It was found that this imparts sufficient flexibility as well as sufficient stiffness, and is easy to manufacture.

In an aspect, the tines have a width and a thickness, wherein the thickness is in a range of one to three times of the width. This helps to impart an increased stiffness to the tines. The stiffness of the tines is about the same as the stiffness of the tooth. This maintains the alignment of the tines during the operation of the wind turbine.

In an aspect, a distance between adjacent tines corresponds to 50 % to 200 % of a width of the tines. It was found that this ratio between the width covered by the tines and the spacing kept therebetween provides a good noise mitigating effect.

In an aspect, the tines have a thickness which is in a range of one to three times of a thickness of the edges of a tooth. The thickness of the edges is measured in a direction perpendicular to the longitudinal direction and perpendicular to the chordwise direction of the serrated panel. Good noise mitigation and high stiffness can be obtained with tines having a thickness that is at least the same as, or preferably larger than the thickness of the edge.

In an aspect, the at least two teeth have the same size. This makes the serrated panel particularly versatile in use. However, one may also use a serrated panel with teeth of different sizes, in particular with teeth having a growing length from one end of the serrated panel to the other end of the serrated panel.

The above problem is also solved by a wind turbine rotor blade comprising a blade root, a blade tip, a leading edge, a trailing edge, an aerodynamic profile, and at least one serrated panel according to any of the claims 1 to 11, the at least one serrated panel being arranged at the trailing edge. The wind turbine rotor blade may be designed for a wind turbine with a rotor with a horizontal axis. The wind turbine rotor may be operated with varying rotor speed and/or may be pitch controlled.

In an aspect, the at least one serrated panel is arranged such that the bases of the at least two teeth are disposed at or behind the trailing edge.

In an aspect, the at least one serrated panel comprises a first serrated panel with teeth of a first size and a second serrated panel with teeth of a second size different from the first size. In this manner, the rotor blade can be provided easily with teeth adapted to the dimensions of the rotor blade, in particular to a local chord and/or to local flow parameters.

The invention will be explained in greater detail with reference to the following drawings:
- Fig. 1: shows a wind turbine rotor blade with a serrated panel in a perspective view,
- Fig. 2: shows a serrated panel in a top view, wherein the tines are not shown,
- Fig. 3: shows the serrated panel of Fig. 2 with tines,
- Fig. 4 a, b: show another serrated panel in a top view,
- Fig. 5: shows a section of the serrated panel of either one of Figs 2 to 4 in a rear view,
- Fig. 6: shows a diagram illustrating the noise mitigating effect of three different serrated panels.

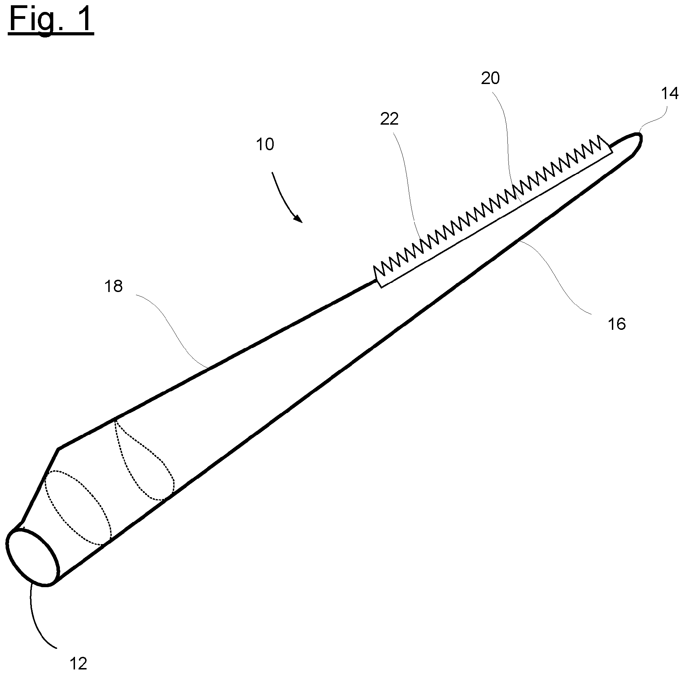

Figure 1 shows a wind turbine rotor blade 10 having a blade root 12, a blade tip 14, a leading edge 16, and a trailing edge 18. In cross-section, the wind turbine rotor blade 10 has an aerodynamic profile. The spanwise direction extends from the blade root 12 towards the blade tip 14. The chordwise direction extends perpendicular to the spanwise direction from the leading edge 16 towards the trailing edge 18.

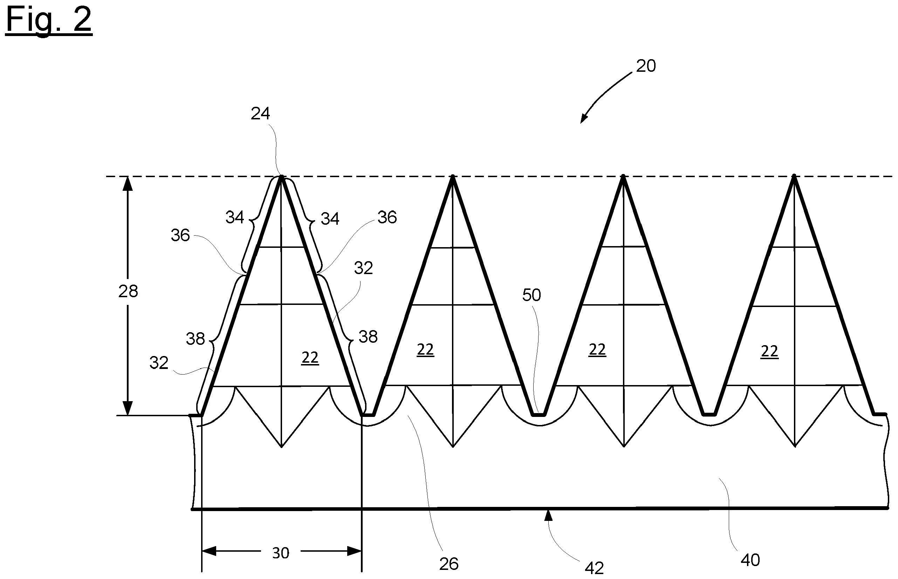

An outer length section of the wind turbine rotor blade is provided with a serrated panel 20, which is attached to the outer surface of the wind turbine rotor blade 10 and has a plurality of teeth 22. The serrated panel 20 is positioned such that the bases 26 (see Fig. 2) of the teeth 22 are aligned with the trailing edge 18.

Fig. 2 shows a section of the serrated panel 20 of Fig. 1, wherein the tines are not shown for clarity purposes. The serrated panel 20 has teeth 22, each tooth 22 has a tip 24 and a base 26. A length 28 of a tooth is measured in chordwise direction between the tip 24 and the base 26. A width 30 of a tooth 22 is measured in spanwise direction. A small gap 50 is formed between the bases 26 of each pair of adj acent teeth 22.

The teeth 22 have the shape of an equilateral triangle, wherein both edges 32 meeting at the tip 24 have the same length. Each edge 32 has a tip end-section 34 beginning at the tip 24 and extending up to an intermediate point 36. A main section 38 of each edge 32 begins at the intermediate point 36 and extends from there towards the base.

In addition to the teeth 22, the serrated panel 20 comprises the fastening section 40. The teeth 22 extend from a rearward end of the fastening section 40. The fastening section 40 has an adherend surface 42, which is disposed at the back of the fastening section 40, away from the viewer.

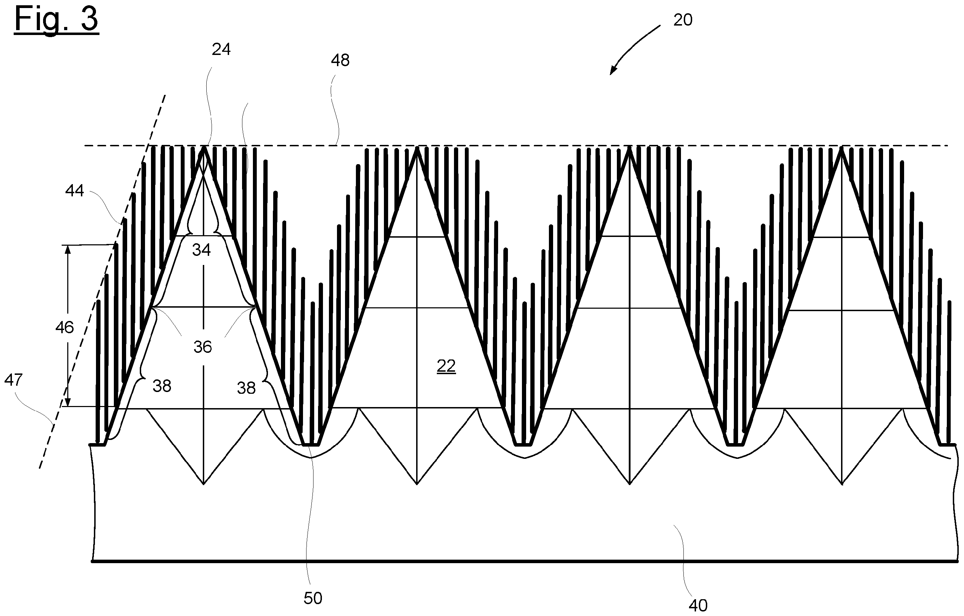

Fig. 3 shows the serrated panel of Fig. 2 with a plurality of tines 44. One can see the tines 44 extending from the edge of the main section 38 all have the same, first length 46, which is about 50 % of the length 28 of the teeth 22. A straight line 47 connecting the free ends of the tines in the main section 38 runs parallel to the edge of the respective tooth 22. The tines 44 extending from the tip end-section 34 are shorter and have lengths selected such that their free ends are positioned at a straight line 48 connecting the tips 24 of adjacent teeth 22. In the shown embodiment, the tip end-section comprises five tines. No one of the tines touches the straight line 47. Within each gap 50, there is one additional tine 44 having a length shorter than the first length 46. The free end of the additional tine 44 lays on the straight line 47.

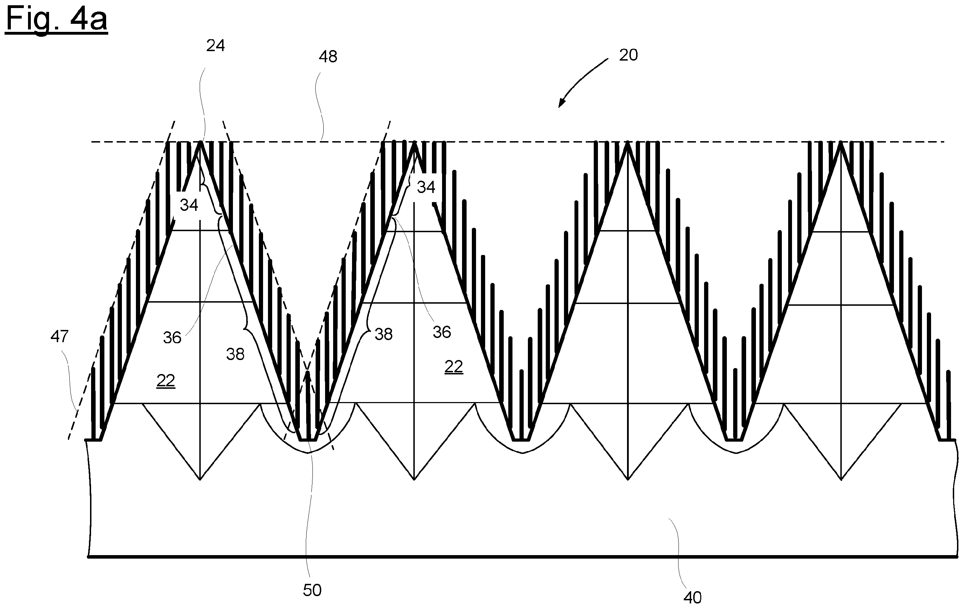

Fig. 4a shows another serrated panel 20. In the main sections 38, it comprises tines 44 all having a first length 46 which is about 30 % of the length 28 of a tooth 22. The intermediate points 36 lie closer to the tips 24 than in the serrated panel 20 of Fig. 3, so that the main sections 38 are longer than s the tip end-sections 34. A straight line 47 connecting the free ends of the tines in the main section 38 runs parallel to the edge of the respective tooth 22. In this embodiment, the free end of the outermost tip-side tine touches the straight line 48 as well. Apart from that, the serrated panels of Figs. 3 and 4a are the same.

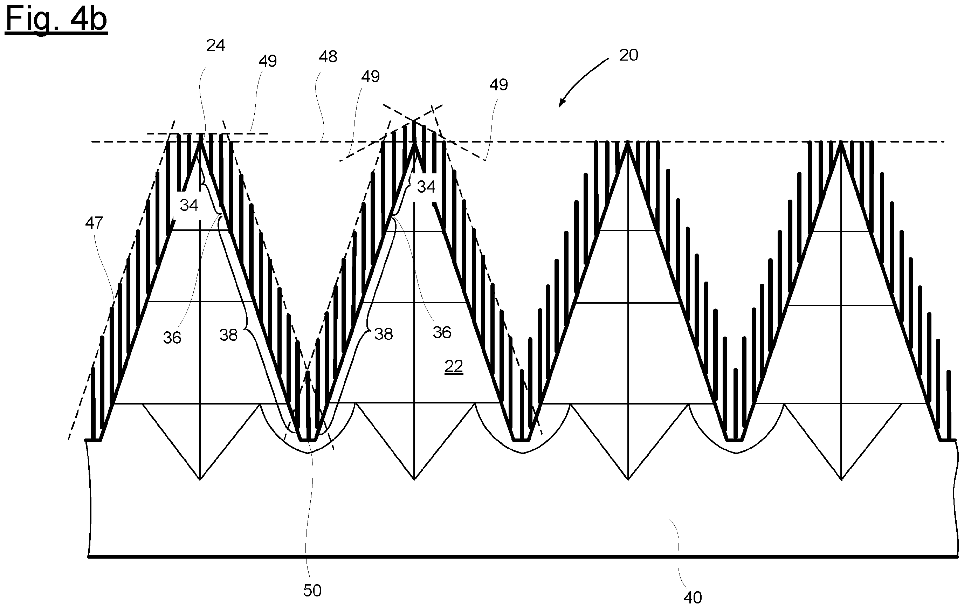

Fig. 4b shows further embodiments of the serrated panel 20. The tines 44 located in the main section 38 have the same shape as shown in figure 4a. The same applies for the location of the tip end-section 34 and the intermediate point 36. In contrast to figure 4a, the tines located in the tip end-section 34 of the first and second teeth seen from the left side extend beyond the straight line 48, that connects the tips of the teeth. In the shown embodiment, an additional tine is provided at the outmost tip of these both teeth. At the first tooth, the free ends of the tines of the tip end-section 34 end at the straight line 49, which runs in the distance behind the straight line 48. At the second tooth, the free ends of the tines of the tip end-section 34 end at the two straight lines 49, which runs in an angle to each other such that the tines provide a tip shape having a flatter angle than the tooth of the serration panel. In both embodiments, the tines in the main section 38 have all the same length and the length of the tines in the tip end-section is shorter than the length of the tines 44 in the main section 38.

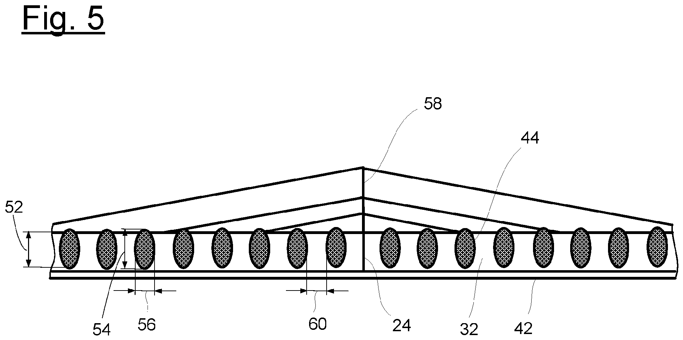

In Fig. 5, a smaller section of the serrated panel 20 of Figure 3 comprising a tooth is shown in rear view, so that a tip 24 is facing the viewer. A midline 58 of the tooth 22 is also shown. The adherend surface 42 of the fastening section is facing downwards in Fig. 5.

In this view, one can see the edges 32 having a thickness 52. One can also see the cross-section of the tines 44, which is oval. The tines have a thickness (height) 54 and a width 56, which is smaller than the thickness 54. The thickness 52 of the edges 32 is smaller than the thickness 54 of the tines 44. Between adjacent tines 44, there is a distance 60, which is about the same size as the width 56 of the tines 44.

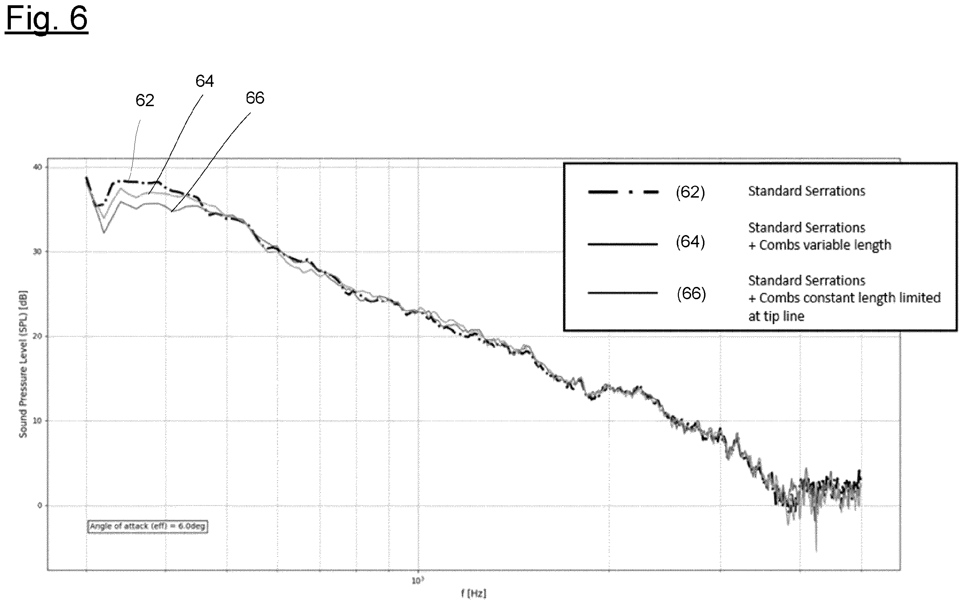

Fig. 6 illustrates the results of acoustic measurements recording sound pressure levels over a large frequency range performed in a wind tunnel with three different serrated panels 20 attached to a section of a wind turbine rotor blade 10.

The curve 62 corresponds to the measured sound pressure level when using a standard serrated panel 20 with no tines 44 at all. The curve 64 corresponds to the measured sound pressure level when using a serrated panel 20 having tines 44, all of them ending at a straight line 49 running in a distance of the tips 24 of the teeth 22, which is known from the state of the art. The curve 66 corresponds to the measured sound pressure level when using a serrated panel 20 with tines designed in accordance with the claimed invention. One can see the sound pressure levels can be reduced by the invention significantly in a low frequency range between about 200 Hz and 400 Hz.

### List of reference numerals:

- 10: wind turbine rotor blade
- 12: blade root
- 14: blade tip
- 16: leading edge
- 18: trailing edge
- 20: serrated panel
- 22: tooth
- 24: tip
- 26: base
- 28: length of a tooth
- 30: width of a tooth
- 32: edge
- 34: tip end-section
- 36: intermediate point
- 38: main section
- 40: fastening section
- 42: adherend surface
- 44: tine
- 46: first length
- 47: straight line
- 48: straight line
- 49: straight line
- 50: gap
- 52: thickness (of the edges 32)
- 54: thickness (of the tines 44)
- 56: width (of the tines 44)
- 58: midline
- 60: distance

## Claims

1. A serrated panel (20) for a trailing edge (18) of a wind turbine rotor blade (10), the serrated panel (20) comprising
• at least two teeth (22), each tooth (22) having a tip (24), a base (26), a length (28) measured in a chordwise direction between the base (26) and the tip (24), a width (30) measured at the base (26), wherein the length (28) is larger than the width (30), and two edges (32) running from the tip (24) to the base (26), each edge (32) having a tip end-section (34) extending from the tip (24) to an intermediate point (36) of the edge (32), and a main section (38) extending from the intermediate point (32) towards the base (26), and
• a plurality of tines (44) arranged side by side in a chordwise direction, each tine (44) beginning at one of said edges (32) and extending rearwards, **characterised in that**
• all tines (44) beginning in one of said main sections (38) have the same, first length (46), which is between 20 % and 60 % of the length (28) of the respective tooth (22), and all tines (44) beginning in one of said tip end-sections (34) are shorter than the first length (46).

2. The serrated panel (20) of claim 1, **characterised in that** lengths of said tines (44) beginning in one of said tip end-sections (34) are selected such that these tines (44) extend at least up to a straight line (48) connecting the tips (24) of adjacent teeth (22).

3. The serrated panel (20) of claim 1, **characterised in that** lengths of said tines (44) beginning in one of said tip end-sections (34) are selected such that these tines (44) end at a straight line (48) connecting the tips (24) of adjacent teeth (22).

4. The serrated panel (20) of any of the claims 1 to 3, **characterised in that** the serrated panel (20) comprises a fastening section (40) adapted for being integrated into or attached to a wind turbine rotor blade (10), wherein the at least two teeth (22) extend from a rearward end of the fastening section (40).

5. The serrated panel (20) of any of the claims 1 to 4, **characterised in that** a tooth (22) and the tines (44) extending from that tooth (22) are manufactured in one piece, in particular using injection moulding.

6. The serrated panel (20) of any of the claims 1 to 5, **characterised in that** the serrated panel (20) is manufactured in one piece, in particular using injection moulding.

7. The serrated panel (20) of any of the claims 1 to 6, **characterised in that** the tines (44) have a constant cross section.

8. The serrated panel (20) of any of the claims 1 to 7, **characterised in that** the tines (44) have a width (56) and a thickness (54), wherein the thickness (54) is in a range of one to three times of the width (56) .

9. The serrated panel (20) of any of the claims 1 to 8, **characterised in that** a distance (60) between adjacent tines (44) corresponds to 50 % to 200 % of the width (56) of the tines (44).

10. The serrated panel (20) of any of the claims 1 to 9, **characterised in that** the tines (44) have a thickness (52) which is in a range of one to three times of a thickness (54) of the edges (32) .

11. The serrated panel (20) of any of the claims 1 to 10, **characterised in that** the at least two teeth (22) have the same size.

12. A wind turbine rotor blade (10) comprising a blade root (12), a blade tip (14), a leading edge (16), a trailing edge (18), an aerodynamic profile and at least one serrated panel (20) according to any of the claims 1 to 11, the at least one serrated panel (20) being arranged the trailing edge (18).

13. The wind turbine rotor blade (10) of claim 12, **characterised in that** the at least one serrated panel (20) is arranged such that the bases (26) of the at least two teeth (22) are disposed at or behind the trailing edge (18).

14. The wind turbine rotor blade (10) of claim 12 or 13, wherein the at least one serrated panel (20) comprises a first serrated panel (20) with teeth (22) of a first size and a second serrated panel (20) with teeth (22) of a second size different from the first size.
